# EUROPEAN PATENT APPLICATION

(11) **EP 3 950 532 A1**
(43) Date of publication of application: **09.02.2022**
(21) Application number: 20779426.4
(22) Date of filing: 23.03.2020
(51) Int. Cl.: B65D 81/26, A23L 3/3427

(54) **SACHET THAT ABSORBS ETHYLENE OR OTHER GASES FOR CONTAINERS OF FRESH PRODUCE INTENDED FOR THE RETAIL MARKET**

(30) Priority: 28.03.2019 ES 201930287
(71) Applicant: Greenkeeper Iberia, S.L., 28031 Madrid (ES)
(72) Inventor: GELI PONS, Ramón, 28031 Madrid (ES); SABATER VILAR, Mónica, 28031 Madrid (ES); MORENO GUERRERO, Carmen, 28031 Madrid (ES)
(74) Representative: Munoz Garcia, Antonio
(86) International application number: PCT/ES2020/070200
(87) International publication number: WO 2020/193834

(57) **Abstract**

The invention relates to a sachet that absorbs ethylene or other gases for containers of fresh produce intended for the retail market which is formed by two sheets welded together at the edges (4), at least one of the sheets, for example, the bottom sheet (2), being made with a porous, water-repellent, breathable material and optionally combined with another sheet (3) of waterproof material, and ethylene-absorbing granules (5) contained therein to absorb gases or other volatile substances produced by fresh produce incorporated in small packages (6), said granules (5) consisting of a substrate impregnated with potassium permanganate or sodium permanganate at a high concentration of between 0.25% and 2%, optionally mixed with activated carbon, such that when the sachet (1) is in contact with moisture generated by the produce, the risk of spotting and contamination by the active ingredient is minimal and absorption efficiency is maintained.

## Description

### OBJECT OF THE INVENTION

As expressed in the title of the present specification, the invention relates to a sachet that absorbs ethylene or other gases for containers of fresh produce intended for the retail market providing for the function for which it is intended advantages and novel features which are described in detail below and represent an improvement of the current state of the art.

More specifically, the object of the invention focuses on an absorbent sachet of the type formed as a sachet-like container, made with porous, water-repellent, breathable technical materials optionally combined with waterproof materials, and incorporating therein granulated materials that absorb ethylene or other gases, being applicable for absorbing said type of gases or other volatile substances produced by fresh produce such as fruits, vegetables, flowers, or ornamental plants, and for preventing them from early deterioration, said sachet being distinguished by the fact that the mentioned absorbent material content in the form of granules, consisting of a substrate impregnated with potassium permanganate, is incorporated at low concentrations, conferring specific properties thereto which, when the sachet is in contact with moisture generated by the mentioned fresh produce, cause the risk of spotting and contamination by the active ingredient to be reduced to a minimum, even when the sachet opens accidentally, and cause contaminating gas absorption efficiency to be maintained at the same time, thereby making it a sachet that is particularly suitable for use in the retail market where the safety of the product offered to the end customer is of utmost importance.

### FIELD OF APPLICATION OF THE INVENTION

The field of application of the present invention is comprised within the sector of the industry dedicated to gas filtration, specifically in the making of breathable containers and sachets for absorbing ethylene and/or other volatile substances produced by fruits, vegetables, flowers, and ornamental plants, and other fresh produce. More specifically, the product is intended for the retail market of small packages in which fruits, vegetables, flowers, culinary herbs, etc., are placed, in all the formats thereof. These small packages can be baskets (both plastic baskets and cardboard baskets that are either closed or have openings, with a cover, or in a flowpack), boxes, or bags made of any of the different materials commonly used for packaging this type of product.

### BACKGROUND OF THE INVENTION

As a reference to the state of the art, there is a need to mention patent numbers ES2547033A2 and P201830799, belonging to the same applicant, which relate to an anti-damp porous sachet formed by two sheets of different materials welded at their edges, one of them being a porous sheet made of a water-repellent, breathable material that constitutes a barrier to bacteria, and the other one being waterproof and made of a laminated plastic material formed by two layers of any plastic material; the outer layer is made of a resistant plastic material, and the inner layer is made of a plastic material suitable for welding to the porous sheet without using wax. The outer layer is made of polyester and the inner layer is made of polyethylene, both of variable thickness. The waterproof sheet optionally has a transparent area and/or includes graphical prints. The sachet contains absorbing elements.

Conventional sachets object of the preceding patents are already considered sachets that are safe and will hold up in a flooding situation lasting for at least more than 15 days. Nevertheless, a production process with sachet tightness failure rates below 1/100,000 is hard to achieve.

The objective of the present invention is to develop a new improved sachet so that it can be sold by the tens of millions on the retail market, and the sachets would therefore reach the end consumer of the fresh produce where ten opened sachets out of every million would not be acceptable for this market.

Specifically, the product is improved such that, even though the user opens the sachet with a pair of scissors (the sachet cannot be opened without using same), problems relating to spotting or contamination by the active ingredient which the sachets used for the wholesale market may experience are non-existent.

Furthermore, the amount of fresh produce contained in the packages for the retail market is much smaller than the fresh produce contained in the packages intended for the wholesale market for which conventional sachets are designed. As a result, the emission of ethylene and other volatile substances by the fresh produce in these packages will also be much lower, and therefore the amount of active product required for removing these compounds from the air is not as high. The conventional sachets present on the market contain absorbing granules with an active ingredient (potassium permanganate or sodium permanganate) concentration above 4%. The present invention proposes the use of a permanganate concentration that is much lower than the concentration used today on the market.

Another label- or adhesive-type product intended for the same application can be found on the market today, specifically a product called "It's Fresh", which is a label, that may or may not be adhesive, formed by a Tyvek^{®} layer and another plastic layer. Said product contains therein, as an active ingredient, a fine mixture of zeolite with palladium nanoparticles based on a development by Johnson Matthey Inc. However, the small amount of absorbent used, i.e., below 20 mg, causes the product to have very limited efficiency.

Therefore, the objective of the invention is to provide the market with a new type of sachets which, with the same strength, air porosity, anti-damp protection, and contaminant removal efficiency, allows a manufacture that is adapted to large production volumes needed to meet the retail market demand.

Moreover, it must be pointed out that the applicant at least is unaware of the existence of any other sachet or invention of similar application having technical, structural, and constitutive features that are identical or similar to those herein claimed.

### SUMMARY OF THE INVENTION

The sachet that absorbs ethylene or other gases for containers of fresh produce intended for the retail market proposed by the invention is configured as an optimal solution for achieving the objectives indicated, with the characterizing details making it possible and suitably distinguishing it being described in the final claims attached to the present description.

More specifically, as indicated above, the invention proposes a new type of sachet, where it can be from a range of formats containing an amount of granules with potassium permanganate or sodium permanganate being contained in the granules, said sachet being distinguished from already known conventional sachets by the fact that it contains low permanganate concentrations, as a result of which the risk of spotting and contamination of the fresh produce by the active ingredient is therefore reduced to a minimum, even when the sachet opens accidentally.

In the preferred embodiment, said granules are granules made up of a high-purity natural clayey base impregnated with a potassium permanganate or sodium permanganate concentration which can range between 0.25 and 2%, the preferred impregnation range being between 0.25% and 1%, and the preferred formulation being the 0.5% formulation.

The preferred clayey base is zeolite (clinoptilolite- or heulandite-type), but other natural clays such as sepiolite, bentonite, smectite, vermiculite, kaolinite, illite, or attapulgite, as well as synthetic zeolites and activated alumina or hydrated alumina, can also be used.

By itself, clinoptilolite-type zeolite has an ethylene absorption capacity of 0.3 I of C₂H₄/kg of granules without any impregnation. If this zeolite is impregnated at growing concentrations of permanganate, this ethylene absorption capacity increases (see Table 1). However, if the impregnation range is maintained in the aforementioned range, the typical violet coloration of potassium permanganate is not produced, and the risk of spotting or contamination of the fresh produce is reduced to a minimum.

**Table 1. Ethylene absorption capacity of the granules based on potassium permanganate concentration.**

| | Z4N | Z1 | Z0.5 | Z0.25 | Z0 |
|---|---|---|---|---|---|
| KMnO₄ concentration (%) | 4.50 | 1.00 | 0.50 | 0.26 | 0.00 |
| Ethylene absorption capacity (liters of C₂H₄/kg) | 2.0 | 0.81 | 0.61 | 0.47 | 0.30 |

Optionally, said granules can be used alone or mixed with an amount of granular activated carbon which can range from 1 to 45% of the total weight of the granules in the sachet. The preferred mixture is that having 30% of the weight of the mixed granules.

Although the primary effect is invariably the removal of ethylene from the air to prevent the hormonal effects thereof on fruits, various scientific articles discuss the positive effects of the cleaning of other volatile compounds produced by the fresh produce itself in terms of delaying fungal development. Activated carbon increases the air cleaning spectrum, the special affinity thereof for cleaning high molecular weight gaseous products being known. The products cleaned by permanganate are low molecular weight gases such as ethylene, ethanol, and acetaldehyde, which have a low molecular weight.

If activated carbon is incorporated in the formulation, water absorption by the granules can furthermore be stopped (see Table 2). When the granules absorb water, the absorption efficiency thereof is limited and the risk of the active ingredient leaking out of the sachet increases. Since the risk of water accumulating in the sachet is higher the smaller the size of the sachet, the incorporation of activated carbon in the size range of this invention allows the effectiveness and safety thereof to be increased in high moisture applications.

**Table 2. Water absorption by sachets with or without activated carbon (AC) under flooding conditions.**

| Type of granules contained in sachets measuring 40x46 mm and 0.3 g | Mean water absorption in 25 sachets (% initial weight) | | |
|---|---|---|---|
| | 24 hours | 7 days | 14 days |
| GKZ1 | 17% | 38% | 65% |
| GKZ1+AC (30% by weight) | 14% | 14% | 14% |

Preferably, a grain size distribution (between 2 and 0.5/0.2 mm) and density (0.93 +/- 0.5% g/ml) which, as described in the preceding patents belonging to the same applicant, allow the inclusion of a larger amount of granules per container material, are used.

Likewise, the sachets may have any of the common weights and sizes within the range of sachets having an optimized size that is also already known in the state of the art, nevertheless, the preferred sizes being two models measuring 40x46 mm and 50x46 mm in which different amounts of the indicated formulations can be introduced depending on the type of produce to be protected.

The sachets can be presented individually as well as in strips so that they can be used in automatic cutting and gluing machines. Furthermore, optionally said strips of sachets can also be made such that the face made of a laminated material contains an adhesive so that said strips can be applied by means of a machine or by hand on small packages.

The sachets can also be housed in the outer part of the cover of closed baskets, in a space created on the cover with grooves towards the inside of the basket, and they can be covered in said housing by the label of the basket which is applied right on top.

The sachets can also perform two functions: protecting the fresh produce by means of removing ethylene and other volatile compounds, and providing information to the customer by working as a label. The packages are transparent, so information about the type of fresh produce and the origin thereof can be printed on one face of the sachet (the face made of laminated plastic which is in direct contact with the package) and standard information about the safety of the sachet can be printed on the other face (the face made of Tyvek^{®} material).

As mentioned above, the sachet of the invention therefore has the main advantage that said granules allow effectively removing ethylene and other volatile compounds from the air in the packages of fresh produce for the retail market and at the same time reducing the risk of spotting and contamination of said fresh produce by the active ingredient to a minimum, an essential requirement to assure consumer safety.

Tables 3, 4, and 5 included below indicate the performance of the sachets based on the estimated amounts of ethylene produced in packages of fresh produce (strawberry, raspberry, and blueberry) with different weights commonly found on the retail market during a realistic shelf life. The figures obtained for the remaining absorption capacity of the sachets after the shelf life has elapsed indicate that the sachets are sized for generously absorbing ethylene emitted by the fresh produce.

**Table 3. Remaining absorption capacity of the sachets object of the invention after a 7-day shelf life in packages of raspberry.**

| Raspberry weight (kg) | Protection time (days) | Raspberry emission (ml C₂H₄) (1)(2) | Sachet weight (grams of granules) | Absorption capacity of the sachet (ml C₂H₄) (3) | Remaining absorption capacity of the sachet after 14 days (%) |
|---|---|---|---|---|---|
| 0.125 | 7 | 0.13 | 0.375 | 0.375 | 65% |

| | | | | | |
|---|---|---|---|---|---|
| (1) Raspberry emission ratio at 20°C: 6 µliter/kg*h (Harshaman, 2012; Thesis University of Maryland, U.S.A) (2) Estimated emission for raspberry (ml): 6 µliter/kg*h × 0.125 kg × 7 days × 24 hours × 10⁻³ (3) Absorption capacity of the sachet (ml C₂H₄): 0.375 g × 1 ml/g (Z1) (4) Remaining absorption capacity (%): 100*(0.375 - 0.13)/0.375 | | | | | |

**Table 4. Remaining absorption capacity of the sachets object of the invention after a 14-day shelf life in packages of strawberry.**

| Strawberry weight (kg) | Shelf life (days) | Strawberry emission (ml C₂H₄) (1)(2) | Sachet weight (grams of granules) | Absorption capacity of the sachet (ml C₂H₄) | Remaining absorption capacity of the sachet after 14 days (%) |
|---|---|---|---|---|---|
| 2 | 14 | 0.07 | 0.5 | 0.4 | 83% |
| 1 | 14 | 0.03 | 0.3 | 0.24 | 86% |
| 0,5 | 14 | 0.02 | 0.188 | 0.1504 | 89% |
| 0.25 | 14 | 0.01 | 0.188 | 0.1504 | 94% |

| | | | | | |
|---|---|---|---|---|---|
| (1) Strawberry emission ratio at 20°C: 0.1 µliter/kg*h (http://postharvest.ucdavis.edu) (2) Estimated emission for strawberry (ml): 0.1 µliter/kg*h × strawberry weight (kg) × 14 days × 24 hours × 10⁻³ (3) Absorption capacity of the sachet (ml C₂H₄): sachet weight (g) × 0.8 ml/g (Z1/AC) (4) Remaining absorption capacity (%): 100*(sachet capacity - actual emission)/sachet capacity | | | | | |

**Table 5. Remaining absorption capacity of the sachets object of the invention in packages of two blueberry varieties.**

| Blueberry weight (kg) and variety | Shelf life (days) | Blueberry emission (ml C₂H₄) (1) | Sachet weight (grams of granules) | Absorption capacity of the sachet (ml C₂H₄) | Remaining absorption capacity of the sachet after 14 days (%) |
|---|---|---|---|---|---|
| 0.125 - Northern High Bush | 14 | 0.08 | 0.3 | 0.24 | 66% |
| 0.125 - Rabbiteye | 21 | 0.13 | 0.3 | 0.24 | 46% |

| | | | | | |
|---|---|---|---|---|---|
| (1) Blueberry emission ratio at 20°C: 2 µliter/kg*h (http://postharvest.ucdavis.edu) (2) Estimated emission for blueberry (ml): 2 µl/kg*h × fruit weight (kg) × shelf life (days) × 24 hours × 10⁻³ (3) Absorption capacity of the sachet (ml C₂H₄): sachet weight (g) × 0.8 ml/g (Z1/AC) (4) Remaining absorption capacity (%): 100*(sachet capacity - actual emission)/sachet capacity | | | | | |

The sachet that absorbs ethylene or other gases for containers of fresh produce intended for the retail market that has been described therefore represents an innovation in structural and constitutive features that are unknown up until now, and these reasons, combined with its practical usefulness, provide it with sufficient grounds to obtain the exclusive privilege that is sought.

### DESCRIPTION OF THE DRAWINGS

To complement the description that is being made and for the purpose of helping to better understand the features of the invention, a set of drawings is attached to the present specification as an integral part thereof in which the following is depicted in a non-limiting, illustrative manner:
Figure 1 shows a longitudinal section view of an example of a sachet that absorbs ethylene object of the invention, in which the main elements it comprises can be seen.
Figure 2 shows a graph comparing the ethylene absorption capacity of clinoptilolite granules impregnated with potassium permanganate at concentrations of 0.25% (Z0.25), 0.5% (Z0.5), and 1% (Z1) with conventional granules impregnated at 4% (Z4).
Figure 3 shows a schematic perspective view of an example of a basket-type container with a housing in the cover to incorporate the absorbent sachet which is then covered by the label of said container.

### PREFERRED EMBODIMENT OF THE INVENTION

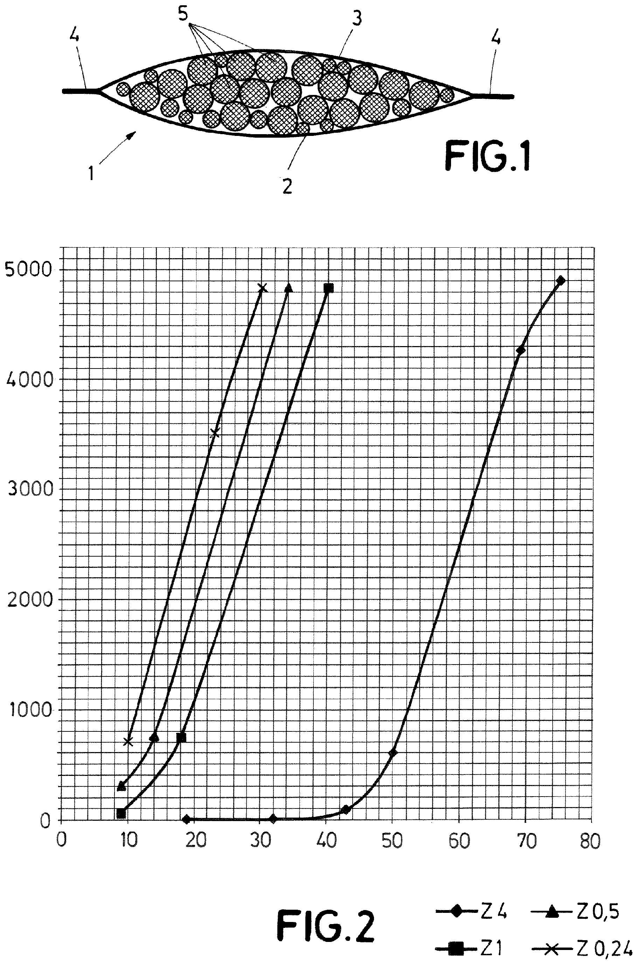

Therefore, as observed in Figure 1, the sachet (1) in question consists, as is known, of a container formed by two sheets, a bottom sheet (2) and another top sheet (3), which are welded together at the edges (4), at least one of said sheets, for example, the bottom sheet (2), is made of a porous, water-repellent, breathable material, and the other sheet (3) is made of an optionally waterproof material, and the sachet contains therein granules (5) of ethylene-absorbing material, which granules (5) consist of a substrate impregnated with potassium permanganate or sodium permanganate, said sachet being distinguished by the fact that said granules (5) are impregnated at a low concentration, specifically in a way such that when the sachet (1) is in contact with moisture generated by the fresh produce incorporated in small packages (6) for which it is intended, even when the sachet (1) opens accidentally, the risk of spotting and contamination by the active ingredient is very low and at the same time contaminating gas absorption efficiency is maintained.

More specifically, the granules (5) contained in the sachet of the invention are made up of a high-purity natural clayey base impregnated with potassium permanganate or sodium permanganate at a concentration of between 0.25% and 2% and have an approximate grain size distribution of between 2 and 0.125 mm and an approximate density of between 1.1 and 0.8 g/ml.

The clayey base is preferably zeolite, particularly clinoptilolite- or heulandite-type zeolite, but the possibility to also use other natural clays, such as sepiolite, bentonite, smectite, vermiculite kaolinite, illite, or attapulgite, as well as synthetic zeolites and activated alumina or hydrated alumina, is not ruled out.

Preferably, the preferred concentration range for the impregnation of the granules (5) with potassium permanganate is 0.25 to 1% and the preferred formulation is the 0.5% formulation.

These granules (5) can be used alone, and optionally or for high moisture applications, mixed with an amount of granular activated carbon which can range from 1% to 45% of the total weight of the granules in the sachet. The preferred mixture is that having 30% of the weight of the mixed granules.

Moreover, the size of the sachet (1) is preferably comprised between 40x46 mm and 50x46 mm, without ruling out other sizes that are already known on the market.

The sachets can be presented individually as well as in strips so that they can be used in automatic cutting and gluing machines for insertion in the packages (6) of produce.

Furthermore, optionally said strips of sachets or the sachets (1) themselves can be made such that the outer face of one of the two sheets (2, 3) forming same contains an adhesive, so that they can be applied, by means of a machine or by hand, in small packages (6).

In any case, the sachet (1) of the invention is intended to be incorporated inside the different types of packages (6) existing on the retail market.

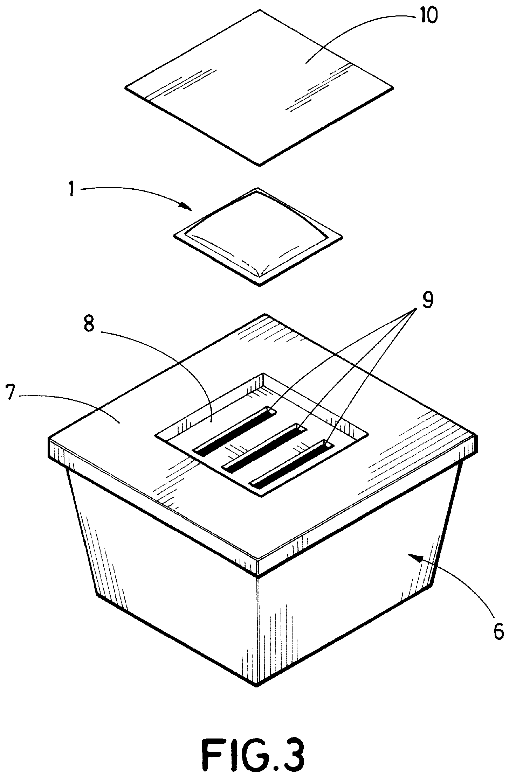

For example, as shown in Figure 3, the sachet can be housed in the outer part of the cover (7) of closed basket-type packages (6), in a space (8) created to that end on said cover (7) with grooves (9) that open towards the inside of the package (6), the sachet in said space (8) being covered in the upper portion thereof by the label (10) which is applied right on top. Figure 3 depicts an exploded view of the mentioned elements so as to allow observing same.

The sachet (1) can furthermore perform two functions, protecting the fresh produce by means of removing ethylene and other volatile compounds, and providing information to the customer by working as a label. To that end, the packages (6) are transparent, and information about the type of fresh produce and the origin thereof can be printed on one face of the sachet (1), the face of the waterproof sheet (3), and standard information about the safety of the sachet can be printed on the other face, the face of the porous sheet (2).

Having sufficiently described the nature of the present invention, as well as the manner of putting it into practice, it is not considered necessary to expand on this explanation so that one skilled in the art will understand its scope and the advantages derived from it, hereby stating that within its essential nature, the invention may be carried out to practice in other embodiments which differ in detail from that indicated by way of example and which will likewise attain the protection that is sought provided that its fundamental principle is not altered, changed, or modified.

## Claims

1. A sachet that absorbs ethylene or other gases for containers of fresh produce intended for the retail market which is formed by two sheets, a bottom sheet (2) and another top sheet (3), which are welded together at the edges (4), at least one of the sheets, for example, the bottom sheet (2), being made with a porous, water-repellent, breathable material and optionally combined with another sheet (3) of waterproof material, and with granules (5) of ethylene-absorbing material contained therein applicable for the absorption of said type of gases or other volatile substances produced by fresh produce incorporated in small packages (6) in order to prevent said produce from early deterioration, **characterized in that** said granules (5) consist of a substrate impregnated with permanganate at a low concentration of between 0.25% and 2%, such that when the sachet (1) is in contact with moisture generated by the fresh produce incorporated in the packages (6), even when the sachet opens accidentally, the risk of spotting and contamination by the active ingredient is very low and at the same time contaminating gas absorption efficiency is maintained.

2. The sachet that absorbs ethylene or other gases for containers of fresh produce intended for the retail market according to claim 1, **characterized in that** the granules (5) contained therein are made up of a high-purity clayey base impregnated with potassium permanganate or sodium permanganate at a concentration of between 0.25% and 2%, and have an approximate grain size distribution of between 2 and 0.125 mm and an approximate density of between 1.1 and 0.8 g/ml.

3. The sachet that absorbs ethylene or other gases for containers of fresh produce intended for the retail market according to claim 2, **characterized in that** the clayey base is a clinoptilolite- or heulandite-type natural zeolite clay.

4. The sachet that absorbs ethylene or other gases for containers of fresh produce intended for the retail market according to claim 2, **characterized in that** the clayey base is a natural clay selected from sepiolite, bentonite, smectite, vermiculite, kaolinite, illite, or attapulgite.

5. The sachet that absorbs ethylene or other gases for containers of fresh produce intended for the retail market according to claim 2, **characterized in that** the clayey base is a base with synthetic zeolites and activated alumina or hydrated alumina.

6. The sachet that absorbs ethylene or other gases for containers of fresh produce intended for the retail market according to any of claims 1 to 5, **characterized in that** the preferred concentration range for the impregnation of the granules (5) with potassium permanganate or sodium permanganate is between 0.25 and 1%.

7. The sachet that absorbs ethylene or other gases for containers of fresh produce intended for the retail market according to claim 6, **characterized in that** the concentration for the impregnation of the granules (5) with potassium permanganate or sodium permanganate is 0.5%.

8. The sachet that absorbs ethylene or other gases for containers of fresh produce intended for the retail market according to any of claims 1 to 7, **characterized in that** the granules (5) are mixed with an amount of granular activated carbon ranging from 1 to 45% of the total weight of the granules in the sachet.

9. The sachet that absorbs ethylene or other gases for containers of fresh produce intended for the retail market according to claim 8, **characterized in that** the amount of activated carbon of the mixture of granules (5) with activated carbon is 30% of the weight.

10. The sachet that absorbs ethylene or other gases for containers of fresh produce intended for the retail market according to any of claims 1 to 9, **characterized in that** the size of the sachet (1) is comprised between 40x46 mm and 50x46 mm.

11. The sachet that absorbs ethylene or other gases for containers of fresh produce intended for the retail market according to any of claims 1 to 10, **characterized in that** the outer face of one of the two sheets (2, 3) the sachet comprises has an adhesive for applying same, by means of a machine or by hand, in small packages (6).

12. The sachet that absorbs ethylene or other gases for containers of fresh produce intended for the retail market according to any of claims 1 to 11, **characterized in that** it is housed in the outer part of the cover (7) of closed basket-type packages (6), in a space (8) created to that end on said cover (7) with grooves (9) that open towards the inside of the package (6), the sachet in said space (8) being covered in the upper portion thereof by the label (10) which is applied right on top.

13. The sachet that absorbs ethylene or other gases for containers of fresh produce intended for the retail market according to any of claims 1 to 12, **characterized in that** in transparent packages (6), in addition to protecting the fresh produce by means of removing ethylene and other volatile compounds, the sachet provides information to the customer by working as a label, since the face of the sachet (1) which is in direct contact with the package (6) has information about the type of fresh produce and the origin thereof printed thereon, and the other face has standard information about the safety of the sachet printed thereon.
